# EUROPEAN PATENT APPLICATION

(11) **EP 3 916 951 A1**
(43) Date of publication of application: **01.12.2021**
(21) Application number: 21165844.8
(22) Date of filing: 30.03.2021
(51) Int. Cl.: H02J 7/00

(54) **METHOD AND SYSTEM TO CALCULATE ACCURATE BATTERY ESTIMATION PARAMETERS USING PRIMARY AND SECONDARY MICRO-CHIP ARCHITECTURE**

(30) Priority: 30.03.2020 IN 202041014118
(71) Applicant: Grinntech Motors and Services Private Limited, 600113 Chennai, Tamilnadu (IN)
(72) Inventor: RA, Bharadwaaj, 613203 Thanjavur, Tamilnadu (IN); MISHRA, Nikhilesh, 600041 Chennai, Tamilnadu (IN)
(74) Representative: Zacco Sweden AB

(57) **Abstract**

Disclosed is a method and system to calculate accurate battery estimation parameters using primary and secondary micro-chip architecture. The system 100 includes a primary micro-chip 102, a sensor unit 106, a secondary micro-chip 104 and a cloud 106. The sensor unit 106 includes a first sensor 108, a second sensor 110, a third sensor 112 and a fourth sensor 114. The primary micro-chip 102 is connected to the first sensor 108, the second sensor 110, the third sensor 112 and the fourth sensor 114 to obtain data related to the battery. The secondary micro-chip 104 calculates battery estimation parameters based on the received data from the primary micro-chip 102. The secondary micro-chip 104 communicates calculated battery estimation parameters to the primary micro-chip 102 to control real time actions include safety critical actions to the battery based on the calculated battery estimation parameters.

## Description

### BACKGROUND

### Technical Field

The present invention relates to a battery management system, and more particularly, the present invention provides a method and system to calculate accurate battery estimation parameters using primary and secondary micro-chip architecture, which results in compromised user experience.

### Description of the Related Art

Along with the sustained and rapid development of national economy and improving constantly of people's living standard, power demand is growing, although the energy output in the whole nation constantly increases, cannot satisfy the demand of people's life and industrial and agricultural development electricity consumption. Valley power consumption can avoid supply of electric power not enough, and can greatly reduce the electricity charge, saves enterprise cost. Yet most of enterprise just opens for business when peak of power consumption daytime, if require the employee to be on night shift, can increase higher human cost.

In order to address the above problem, people adopt the lithium battery energy storage battery device to carry out at night energy storage usually, carrying out energy when needing discharges, existing lithium battery energy storage battery device only has simple charge and discharge function, and the charge and discharge of manual control lithium battery operate very inconvenient, and, when overvoltage, overcurrent occurring, overcharge, cross putting, cannot in time taking corresponding measure during the fault such as excess temperature, under-voltage, short circuit, lithium battery is easy to damage, even beyond thought accident occurs. The Lithiumion battery packs are known to result in fire hazard and electrical shock hazard if not used in the proper operating conditions.

In conventional battery technology, the battery is adapted to include micro-chips for doing tasks with respect to the battery. The micro-chips used in the existing batteries are performed to do tasks but consuming more power. In some batteries, micro-chips are sitting idle thus wasting the calculation capabilities related to the battery. Accordingly, there is a need for a Battery Management System data that works with much powerful micro-chip architecture.

### SUMMARY

In view of a foregoing, an embodiment herein provides a battery management system for calculating accurate battery estimation parameters using primary and secondary micro-chip architecture. The battery management system includes a primary micro-chip, a sensor unit, a secondary micro-chip and a cloud. The sensor unit includes a first sensor, a second sensor, a third sensor and a fourth sensor. The primary micro-chip is electrically connected to (a) the first sensor to obtain data related to voltage of a battery, the second sensor to obtain data related to current flow in the battery, the third sensor to obtain data related to a temperature of the battery and the fourth sensor to obtain data related to vibration of the battery. The second micro-chip is electrically connected to primary micro-chip to receive the data obtained from all the sensors. The secondary micro-chip calculates battery estimation parameters based on the received data from the primary micro-chip. The secondary micro-chip communicates the calculated battery estimation parameters to the primary micro-chip to control real time actions include safety critical actions to the battery based on the calculated battery estimation parameters.

In an embodiment, the battery estimation parameters are calculated by the secondary micro-chip based on the customizations governed by configurations (a) that is hardcoded or set during the time of manufacturing or (b) that is changed on a fly via an external server sending a message to the secondary micro-chip.

In another embodiment, the calculated battery estimation parameters include at least one of a state of charge of battery (SoC), a state of health of the battery (SoH), a state of power of the battery (SoP), data logging, a wired communication such as controller area network (CAN) and communication over wireless such as Bluetooth low energy (BLE), general packet radio services (GPRS), third generation (3G), fourth generation (4G), fifth generation (5G), sixth generation (6G) and lower or higher frequency wireless communication methodologies.

In an aspect, the battery arrangement for calculating accurate battery estimation parameters using primary and secondary micro-chip architecture is provided. The battery arrangement includes one or more sensors, a primary micro-chip and a secondary micro-chip. The secondary micro-chip is electrically connected to the one or more sensors to obtain data related to a battery. The secondary micro-chip calculates battery estimation parameters based on the received data from the primary micro-chip. The primary micro-chip is electrically connected to the secondary micro-chip to receive the calculated battery estimation parameters to control real time actions include safety critical actions to the battery based on the calculated battery estimation parameters.

In an embodiment, the data includes data related to at least one of voltage of the battery, current flow in the battery, a temperature of the battery and vibration of the battery.
In another embodiment, the battery estimation parameters are calculated by the secondary micro-chip based on the customizations governed by configurations (a) that is hardcoded or set during the time of manufacturing or (b) that is changed on a fly via an external server sending a message to the secondary micro-chip.

In yet another embodiment, the calculated battery estimation parameters include at least one of state of charge of battery (SoC), state of health of the battery (SoH), state of power of the battery (SoP), data logging, a wired communication such as controller area network (CAN) and communication over wireless such as Bluetooth low energy (BLE), general packet radio services (GPRS), third generation (3G), fourth generation (4G), fifth generation (5G), sixth generation (6G) and lower or higher frequency wireless communication methodologies.

In another aspect, a method calculating accurate battery estimation parameters using primary and secondary micro-chip architecture is provided. The method includes following steps of: obtaining, using a primary micro-chip, data related to a battery from one or more sensors; receiving, using a secondary micro-chip, the data obtained from the one or more sensors, from the primary micro-chip; calculating, using the secondary micro-chip, battery estimation parameters based on the received data from the primary micro-chip and communicating, using the secondary micro-chip, the calculated battery estimation parameters to the primary micro-chip to control real time actions include safety critical actions to the battery based on the calculated battery estimation parameters.

In an embodiment, the battery estimation parameters are calculated by the secondary micro-chip based on the customizations governed by configurations (a) that is hardcoded or set during the time of manufacturing or (b) that is changed on a fly via an external server sending a message to the secondary micro-chip.

In another embodiment, the calculated battery estimation parameters include at least one of state of charge of battery (SoC), state of health of the battery (SoH), state of power of the battery (SoP), data logging, a wired communication such as controller area network (CAN) and communication over wireless such as Bluetooth low energy (BLE), general packet radio services (GPRS), third generation (3G), fourth generation (4G), fifth generation (5G), sixth generation (6G) and lower or higher frequency wireless communication methodologies.

The battery management system provides the secondary micro-chip that acts as a powerful micro-chip computing more complex calculations while consuming less amount of power. The increased calculation capability results in much better calculation outcome. For example, the state of charge of battery can be calculated much better using more complex calculation as the secondary micro-chip computes power.

Similarly, the range left in the battery can be calculated by the secondary micro-chip much more accurately using the high compute power using data of user driving behavior etc. This can also be used as a redundancy for increased safety. Further, complex calculation can be used for calculating the battery estimation parameters while using the second micro-chip which is much more powerful. The complex calculation can be performed for resulting in better accuracy. Further, the secondary micro-chip can store and process the data to make a separate profile and accurately predict remaining range of battery.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not limitation. Many changes and modifications may be made within the scope of the embodiments herein without departing from the spirit thereof, and the embodiments herein include all such modifications.

### BRIEF DESCRIPTION OF THE DRAWINGS

The embodiments herein will be better understood from the following detailed description with reference to the drawings, in which:
FIG. 1 illustrates a block diagram of a system (i.e. battery management system) to calculate accurate battery estimation parameters using primary and secondary micro-chip architecture according to an embodiment herein;
FIG. 2 illustrates a block diagram of a secondary micro-chip of FIG. 1 according to an embodiment herein; and
FIG. 3 is a flow diagram illustrating a method for calculating accurate battery estimation parameters using primary and secondary micro-chip architecture according to an embodiment herein.

### DETAILED DESCRIPTION OF PREFERRED EMBODIMENTS

The embodiments herein, the various features, and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

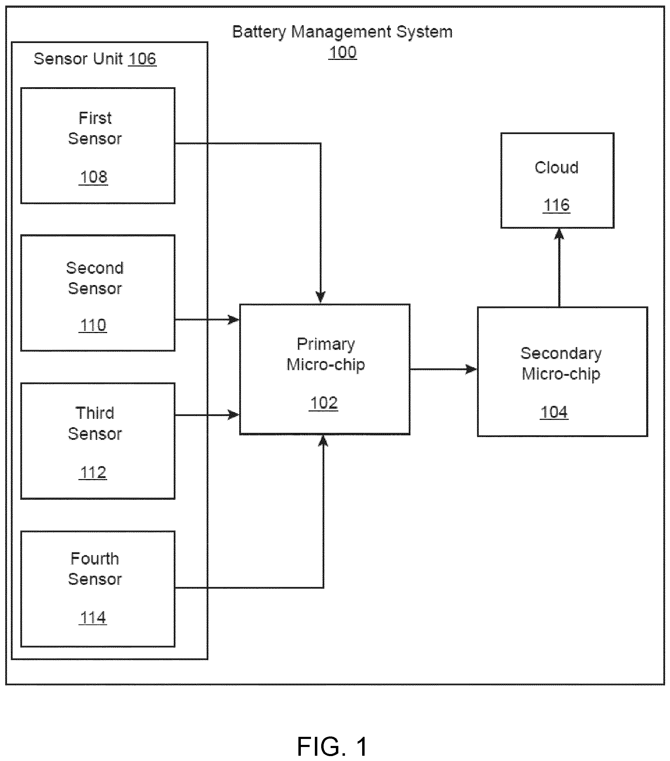

Various embodiments of a battery management system disclosed herein provides a powerful micro-chip. Further, the powerful micro-chip calculates battery estimation parameters based on the data received from another micro-chip. The uniqueness of this system is to calculate the accurate battery estimation parameters in much better calculation outcome. Referring now to the drawings, and more particularly to FIGS. 1 through 3, where similar reference characters denote corresponding features consistently throughout the figures, there are shown preferred embodiments.

FIG. 1 illustrates a block diagram of a system 100 (i.e. a battery management system) to calculate accurate battery estimation parameters using primary and secondary micro-chip architecture according to an embodiment herein. The battery management system 100 includes a primary micro-chip 102, a secondary micro-chip 104, a sensor unit 106 and a cloud 116. The sensor unit 106 includes a first sensor 108, a second sensor 110, a third sensor 112 and a fourth sensor 114. The first sensor 108 senses a voltage of the battery. The second sensor 110 senses current flow in the battery. The third sensor 112 senses a temperature of the battery. The fourth sensor 114 senses vibration of the battery. The primary micro-chip 102 is electrically connect to the sensor unit 106 to receive data related to the battery. The data related to the battery includes at least one of the voltage of the battery, the current flow in the battery, the temperature of the battery and the acceleration of the battery.

The secondary micro-chip 104 is electrically connected to the primary micro-chip 102 to receive the data obtained from the sensor unit 106. The secondary micro-chip 104 calculates battery estimation parameters based on the received data from the primary micro-chip 102. In an embodiment, the secondary micro-chip 104 is directly connected to the sensor unit 106 to receive the data related to the battery and the secondary micro-chip 104 calculates the battery estimation parameters based on the data received from the sensor unit 106. The battery estimation parameters are calculated by the secondary micro-chip 104 based on the customizations governed by configurations that can be hardcoded or set during the time of manufacturing. In an embodiment, the configurations can be changed on the fly via an external server sending a message to calculate the battery estimation parameters. The secondary micro-chip 104 compares the received data related to the battery with pre-stored calibration data to calculate the battery estimation parameters. The secondary micro-chip 104 communicates the calculated battery estimation parameters to the primary micro-chip 102. The primary micro-chip receives the calculated battery estimation parameters to control real time actions such as safety critical actions to the battery based on the calculated battery estimation parameters. The safety critical actions controlled by the primary micro-chip 102 may include actions such as disabling the battery from charging and discharging using a contactor or a switching element. In an embodiment, the secondary micro-chip 104 communicates the calculated battery estimation parameters to a user device. In an embodiment, the calculated battery estimation parameters are communicated to a user device using a cloud 116. The calculated battery estimation parameters include at least one of a state of charge of battery (SoC), a state of health of the battery (SoH), a state of power of the battery (SoP), data logging, a wired communication such as controller area network (CAN) and communication over wireless such as Bluetooth low energy (BLE), general packet radio services (GPRS), third generation (3G), fourth generation (4G), fifth generation (5G), sixth generation (6G) and lower or higher frequency wireless communication methodologies.

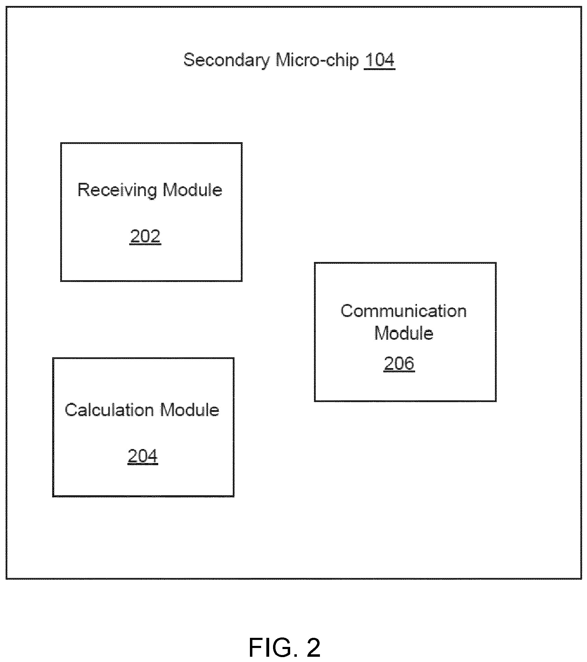

FIG. 2 illustrates a block diagram of the second micro-chip 104 of FIG. 1 according to an embodiment herein. The second micro-chip 104 includes a receiving module 202, a calculation module 204 and a communication module 206. The receiving module 202 receives the data related to the battery from the primary micro-chip 102. In an embodiment, the data related to the battery includes at least one of the voltage of the battery, the current flow in the battery, the temperature of the battery and the vibration of the battery sensed by the sensor unit 106. The calculation module 204 calculates the battery estimation parameters based on the received data from the primary micro-chip 102. The calculation module 204 further compares the received data related to the battery with pre-stored calibration data to calculate the battery estimation parameters. The communication module 206 of the secondary micro-chip 104 communicates the calculated battery estimation parameters to the primary micro-chip 102 to control real time actions such as safety critical actions to the battery based on the calculated battery estimation parameters.

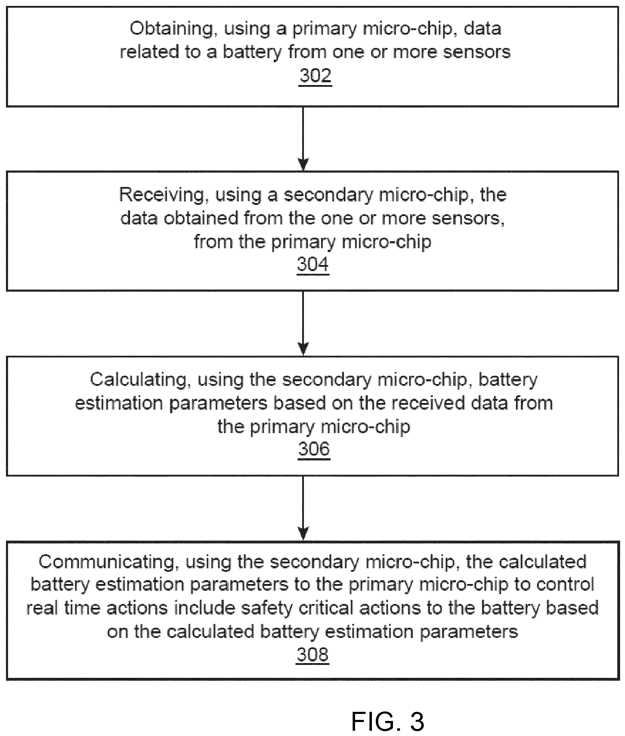

FIG. 3 is a flow diagram illustrating a method for calculating accurate battery estimation parameters using primary and secondary micro-chip architecture according to an embodiment herein. At step 302, data related to a battery is obtained from a sensor unit 106 using a primary micro-chip 102. The sensor unit 106 includes one or more sensors include a first sensor 108, a second sensor 110, a third sensor 112 and a fourth sensor 114. In an embodiment, the data related to the battery includes at least one of voltage of the battery, current flow in the battery, temperature of the battery and vibration of the battery sensed by the one or more sensors respectively. At step 304, the data obtained from the one or more sensors are received from the primary micro-chip 102 using the secondary micro-chip 104. At step 306, battery estimation parameters are calculated by the second micro-chip 104 based on the data received from the primary micro-chip 102. In an embodiment, the battery estimation parameters are calculated by the secondary micro-chip 104 based on the customizations governed by configurations (a) that is hardcoded or set during the time of manufacturing or (b) that is changed on a fly via an external server sending a message to the secondary micro-chip 104.

At step 308, the calculated battery estimation parameters are communicated to the primary micro-chip 102 to control real time actions include safety critical actions to the battery based on the calculated battery estimation parameters. In an embodiment, the calculated battery estimation parameters include at least one of a state of charge of battery (SoC), a state of health of the battery (SoH), a state of power of the battery (SoP), data logging, a wired communication such as controller area network (CAN) and communication over wireless such as Bluetooth low energy (BLE), general packet radio services (GPRS), third generation (3G), fourth generation (4G), fifth generation (5G), sixth generation (6G) and lower or higher frequency wireless communication methodologies.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the appended claims.

## Claims

1. A battery management system, BMS, (100) for calculating accurate battery estimation parameters using primary and secondary micro-chip architecture, comprising:
a primary micro-chip (102) electrically connected to:
a first sensor (108) to obtain data related to voltage of a battery;
a second sensor (110) to obtain data related to current flow in the battery;
a third sensor (112) to obtain data related to a temperature of the battery; and
a fourth sensor (114) to obtain data related to vibration of the battery; and
a secondary micro-chip (104) electrically configured to:
connect to the primary micro-chip (102) to receive the data obtained from the sensors;
calculate battery estimation parameters based on the received data from the primary micro-chip (102); and
communicate the calculated battery estimation parameters to the primary micro-chip (102) to control real time actions include safety critical actions to the battery based on the calculated battery estimation parameters.

2. The battery management system (100) according to Claim 1, wherein the battery estimation parameters are calculated by the secondary micro-chip (104) based on the customizations governed by configurations (a) that is hardcoded or set during the time of manufacturing or (b) that is changed on a fly via an external server sending a message to the secondary micro-chip (104).

3. The battery management system (100) according to Claim 1, wherein the calculated battery estimation parameters include at least one of a state of charge of battery, SoC, a state of health of the battery, SoH, a state of power of the battery (SoP), data logging, a wired communication such as controller area network, CAN, and communication over wireless such as Bluetooth low energy, BLE, general packet radio services, GPRS, third generation, 3G, fourth generation, 4G, fifth generation, 5G, sixth generation, 6G, and lower or higher frequency wireless communication methodologies.

4. A battery management system for calculating accurate battery estimation parameters using primary and secondary micro-chip architecture, comprising:
one or more sensors;
a secondary micro-chip (104) electrically connected to the one or more sensors to obtain data related to a battery,
wherein the secondary micro-chip (104) calculates battery estimation parameters based on the data from the one or more sensors; and
a primary micro-chip (102) electrically connected to the secondary micro-chip (104) to receive the calculated battery estimation parameters to control real time actions include safety critical actions to the battery based on the calculated battery estimation parameters.

5. The battery arrangement according to Claim 4, wherein the data comprises data related to at least one of voltage of the battery, current flow in the battery, a temperature of the battery and vibration of the battery.

6. The battery arrangement according to Claim 4, wherein the battery estimation parameters are calculated by the secondary micro-chip (104) based on the customizations governed by configurations (a) that is hardcoded or set during the time of manufacturing or (b) that is changed on a fly via an external server sending a message to the secondary micro-chip (104) .

7. The battery arrangement according to Claim 4, wherein the calculated battery estimation parameters include at least one of state of charge of battery, SoC, state of health of the battery, SoH, state of power of the battery, SoP, data logging, a wired communication such as controller area network, CAN, and communication over wireless such as Bluetooth low energy, BLE, general packet radio, GPRS, third generation, 3G, fourth generation, 4G, fifth generation, 5G, sixth generation, 6G, and lower or higher frequency wireless communication methodologies.

8. A method for calculating accurate battery estimation parameters using primary and secondary micro-chip architecture, the method comprising:
obtaining (302), using a primary micro-chip (102), data related to a battery from one or more sensors;
receiving (304), using a secondary micro-chip (104), the data obtained from the one or more sensors, from the primary micro-chip (102);
calculating (306), using the secondary micro-chip (104), battery estimation parameters based on the received data from the primary micro-chip (102); and
communicating (308), using the secondary micro-chip (104), the calculated battery estimation parameters to the primary micro-chip (102) to control real time actions include safety critical actions to the battery based on the calculated battery estimation parameters.

9. The method according to Claim 8, wherein the battery estimation parameters are calculated by the secondary micro-chip (104) based on the customizations governed by configurations (a) that is hardcoded or set during the time of manufacturing or (b) that is changed on a fly via an external server sending a message to the secondary micro-chip (104).

10. The method according to Claim 8, wherein the calculated battery estimation parameters include at least one of state of charge of battery, SoC, state of health of the battery, SoH, state of power of the battery, SoP, data logging, a wired communication such as controller area network, CAN, and communication over wireless such as Bluetooth low energy, BLE, general packet radio services, GPRS, third generation, 3G, fourth generation, 4G, fifth generation, 5G, sixth generation, 6G, and lower or higher frequency wireless communication methodologies.
